(19) Europäisches Patentamt
European Patent Office
Office européen des brevets

(11) **EP 4 278 620 B1**

(12) **EUROPEAN PATENT SPECIFICATION**

(45) Date of publication and mention
of the grant of the patent:
**29.10.2025  Bulletin 2025/44**

(21) Application number: **21918525.3**

(22) Date of filing: **15.01.2021**

(51) International Patent Classification (IPC):
*H04W 64/00* (2009.01)     *G01S 5/00* (2006.01)
*G01S 5/02* (2010.01)       *H04L 5/00* (2006.01)

(52) Cooperative Patent Classification (CPC):
**H04W 64/00; G01S 5/0009; G01S 5/0205;
H04L 5/0051; H04L 5/0091**

(86) International application number:
**PCT/CN2021/072035**

(87) International publication number:
**WO 2022/151317 (21.07.2022 Gazette 2022/29)**

(54) **POSITIONING USING MULTIPLE FREQUENCY LAYERS**

POSITIONIERUNG MIT MEHREREN FREQUENZSCHICHTEN

POSITIONNEMENT À L'AIDE DE MULTIPLES COUCHES DE FRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.11.2023  Bulletin 2023/47**

(73) Proprietor: **ZTE Corporation
Shenzhen, Guangdong  518057 (CN)**

(72) Inventors:
• **JIANG, Chuangxin
  Shenzhen, Guangdong 518057 (CN)**
• **ZHENG, Guozeng
  Shenzhen, Guangdong 518057 (CN)**
• **LU, Zhaohua
  Shenzhen, Guangdong 518057 (CN)**
• **WU, Hao
  Shenzhen, Guangdong 518057 (CN)**
• **XIAO, Huahua
  Shenzhen, Guangdong 518057 (CN)**
• **PAN, Yu
  Shenzhen, Guangdong 518057 (CN)**

(74) Representative: **Vossius & Partner
Patentanwälte Rechtsanwälte mbB
Siebertstraße 3
81675 München (DE)**

(56) References cited:
EP-A1- 4 240 027       EP-A1- 4 277 378
WO-A1-2020/222603      CN-A- 110 192 117
CN-A- 110 808 820      CN-A- 111 277 385
CN-A- 111 465 101      CN-A- 112 219 422

• **MODERATOR (CATT): "FL Summary #9 for
Potential Positioning Enhancements", vol. RAN
WG1, no. e-meeting; 20201026 - 20201113, 13
November 2020 (2020-11-13), XP052351585,
Retrieved from the Internet <URL:https://
ftp.3gpp.org/tsg_ran/WG1_RL1/TSGR1_103-e/
Docs/R1-2009678.zip R1-2009678 FL Summary
#9 for NR PosEnh.docx> [retrieved on 20201113]**

**Description**

TECHNICAL FIELD

The disclosure relates generally to wireless communications, including but not limited to systems and methods for positioning using multiple frequency layers.

BACKGROUND

The standardization organization Third Generation Partnership Project (3GPP) is currently in the process of specifying a new Radio Interface called 5G New Radio (5G NR) as well as a Next Generation Packet Core Network (NG-CN or NGC). The 5G NR will have three main components: a 5G Access Network (5G-AN), a 5G Core Network (5GC), and a User Equipment (UE). In order to facilitate the enablement of different data services and requirements, the elements of the 5GC, also called Network Functions, have been simplified with some of them being software based so that they could be adapted according to need.
CATT, "FL Summary #9 for Potential Positioning Enhancements," 3GPP DRAFT; R1-2009678 relates to the aggregation of multiple DL positioning frequency layers.

SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

At least one aspect is directed to a method or a communication device. A first communication device configures a first aggregated positioning information for aggregated positioning measurement in a first plurality of frequency layers. The first communication device receives from the second communication device, a report comprising a second aggregated positioning information for aggregated positioning measurement in a second plurality of frequency layers. The first aggregated positioning information is associated with at least one of the first plurality of frequency layers, and the second aggregated positioning information is associated with at least one of the second plurality of frequency layers.

In some embodiments, one of the first or the second plurality of frequency layers may be a reference frequency layer of other frequency layers of the first plurality of frequency layers or the second plurality of frequency layers. In some embodiments, only positioning information of the reference frequency layer may be used as the first aggregated positioning information or the second aggregated positioning information.

In some embodiments, the positioning information of the reference frequency layer may include as least one of: a set of downlink (DL) positioning reference signal (PRS) resources to be used as a reference for measurements of DL reference signal time difference (RSTD), DL PRS reference signal received power (PRS-RSRP), and UE reception-transmission (Rx-Tx) time difference; a transmission-reception point (TRP) identifier (ID), one or more DL PRS resource IDs, or a DL PRS resource set ID, used to determine the reference for the measurements; or a time stamp parameter which includes a single frequency network (SFN) and a slot number for a subcarrier spacing (SCS).

In some embodiments, the first communication device may receive, from the second communication device, an indication that a subset of the first plurality of frequency layers, or a subset of a first plurality of positioning resource set identifiers (IDs) configured by the first communication device, is to be measured for the aggregated positioning measurement report.

In some embodiments, the second aggregated positioning information may include a user equipment (UE) capability report comprising at least one of: a maximum bandwidth ($B_F$) of an aggregate of the second plurality of frequency layers; a maximum number of frequency layers (F) in the aggregate; a first duration ($N_F$) of downlink (DL) positioning reference signal (PRS) symbols in millisecond (ms) processed every second duration ($T_F$) in ms for the aggregate's measurement; or a maximum or minimum of phase shift or timing shift among frequency layers in the aggregate.

In some embodiments, the $B_F$ may include one or more frequency gaps among pairs of frequency layers in the second plurality of frequency layers. In some embodiments, $N_F \leq N$ or $T_F \geq T$, and N may be a first duration of DL PRS symbols in ms processed every second duration (T) in millisecond (ms) for a single frequency layer's measurement.

The second aggregated positioning information includes user equipment (UE) capability for an aggregate of the second plurality of frequency layers, and is based on an UE capability report for a single frequency layer of the second plurality of frequency layers.

In some embodiments, $N_F$ may be determined according to N and at least one of F, $B_F$ or B; $T_F$ may be determined according to T and at least one of F, $B_F$ or B; or $R_F$ may be determined according to R and at least one of F, $B_F$ or B. In some embodiments, $N_F$ may be a first duration of downlink (DL) positioning reference signal (PRS) symbols in millisecond (ms) processed every second duration ($T_F$) in ms for the aggregate's measurement, F may be a maximum number of frequency layers in the aggregate, N may be a first duration of DL PRS symbols in ms processed every second duration (T) in ms for one frequency layer's measurement, and B may be a maximum bandwidth of the one frequency layer, $B_F$ may be a maximum bandwidth ($B_F$) of an aggregate of the second plurality of frequency layers.

In some embodiments, a duration $K_F$ in millisecond (ms) of downlink (DL) positioning reference signal (PRS) symbols within a time window (P) in ms for an aggregate of frequency layers from the first or second plurality of frequency layers, may be determined by K and at least one of F', $B_F$' or B. In some embodiments, K may be a duration in ms of DL PRS symbols within a time window in ms for one frequency layer's PRS processing; F may be a maximum number of frequency layers in the aggregate; F' maybe a configured number of frequency layers in the aggregate, or a function of the configured number of frequency layers, $B_F$' maybe a configured bandwidth of the aggregate, a function of the configured bandwidth, and B may be a maximum bandwidth of the one frequency layer. In some embodiments, $K_F = F'*K$. In some embodiments, $K_F$ may be K multiplied by a function of $B_F$' and B.

In some embodiments, the reference frequency layer may be used for calculating at least one of: a total downlink (DL) reference signal time difference (RSTD) measurement period ($T_{RSTD, Total}$) or a measurement period for DL positioning reference signal (PRS) reference signal received power ($T_{PRS-RSTD,i}$), and no other frequency layer of the first or the second plurality of frequency layers may be used.

In some embodiments, the first communication device may transmit, to the second communication device, a signaling that schedules at least a first positioning reference signal (RS) resource with a first resource identifier (ID) or a first resource set with a first resource set ID=I, in a first frequency layer, and a second positioning RS resource with the first resource ID or a resource set with the first resource set ID, in a second frequency layer, wherein the first frequency layer and the second frequency layer are from the first plurality of frequency layers. In some embodiments, a bandwidth part (BWP) ID for the first RS resource or the first resource set, may be same as that for the second RS resource or the second resource set.

BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.

FIG. 1 illustrates an example cellular communication network in which techniques disclosed herein may be implemented, in accordance with an embodiment of the present disclosure;

FIG. 2 illustrates a block diagram of an example base station and a user equipment device, in accordance with some embodiments of the present disclosure;

FIG. 3 illustrates a block diagram of a specification of a scheduling grant from a wireless communication node to schedule multiple resource sets in different carriers with same resource set identifiers for positioning in accordance with an illustrative embodiments;

FIG. 4 illustrates a block diagram of a media access control control element (MAC-CE) for positioning sounding reference signals (SRS) activation or deactivation in accordance with an illustrative embodiments;

FIG. 5 illustrates a block diagram of a bandwidth with a frequency gap between multiple frequency layers in accordance with an illustrative embodiments; and

FIG. 6 illustrates a flow diagram of a method of positioning using multiple frequency layers in accordance with an illustrative embodiments.

DETAILED DESCRIPTION

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

## 1. Mobile Communication Technology and Environment

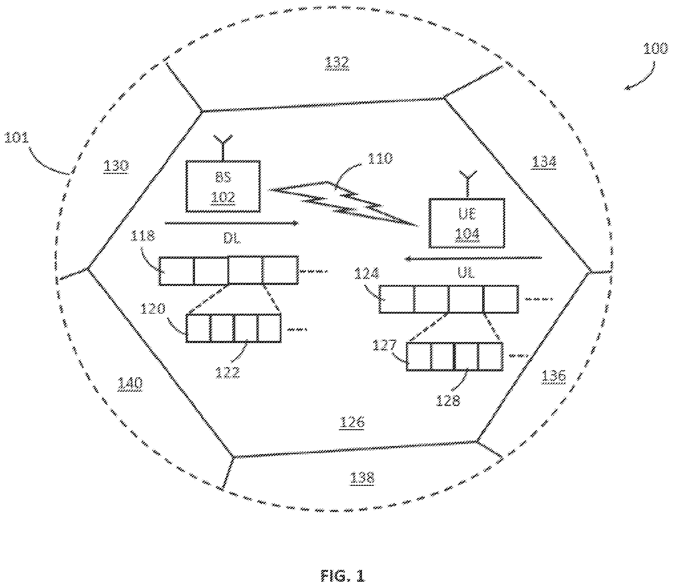

FIG. 1 illustrates an example wireless communication network, and/or system, 100 in which techniques disclosed herein may be implemented, in accordance with an embodiment of the present disclosure. In the following discussion, the wireless communication network 100 may be any wireless network, such as a cellular network or a narrowband Internet of things (NB-IoT) network, and is herein referred to as "network 100." Such an example network 100 includes a base station 102 (hereinafter "BS 102"; also referred to as wireless communication node) and a user equipment device 104 (hereinafter "UE 104"; also referred to as wireless communication device) that can communicate with each other via a communication link 110 (e.g., a wireless communication channel), and a cluster of cells 126, 130, 132, 134, 136, 138 and 140 overlaying a geographical area 101. In Figure 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127 which may include data symbols 122/128. In the present disclosure, the BS 102 and UE 104 are described herein as nonlimiting examples of "communication nodes," generally, which can practice the methods disclosed herein. Such communication nodes may be capable of wireless and/or wired communications, in accordance with various embodiments of the present solution.

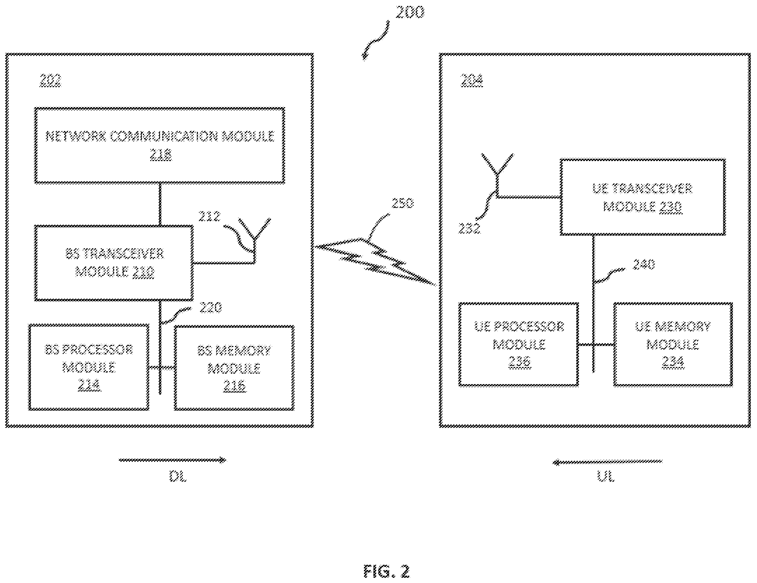

FIG. 2 illustrates a block diagram of an example wireless communication system 200 for transmitting and receiving wireless communication signals (e.g., OFDM/OFDMA signals) in accordance with some embodiments of the present solution. The system 200 may include components and elements configured to support known or conventional operating features that need not be described in detail herein. In one illustrative embodiment, system 200 can be used to communicate (e.g., transmit and receive) data symbols in a wireless communication environment such as the wireless communication environment 100 of Figure 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in Figure 2. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure

In accordance with some embodiments, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some embodiments, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 may be coordinated in time such that the uplink receiver circuitry is coupled to the uplink antenna 232 for reception of transmissions over the wireless transmission link 250 at the same time that the downlink transmitter is coupled to the downlink antenna 212. Conversely, the operations of the two transceivers 210 and 230 may be coordinated in time such that the downlink receiver is coupled to the downlink antenna 212 for reception of transmissions over the wireless transmission link 250 at the same time that the uplink transmitter is coupled to the uplink antenna 232. In some embodiments, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative embodiments, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various embodiments, the BS 202 may be an evolved node B (eNB), a serving eNB, a target eNB, a femto station, or a pico station, for example. In some embodiments, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some embodiments, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bi-directional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

The Open Systems Interconnection (OSI) Model (referred to herein as, "open system interconnection model") is a conceptual and logical layout that defines network communication used by systems (e.g., wireless communication device, wireless communication node) open to interconnection and communication with other systems. The model is broken into seven subcomponents, or layers, each of which represents a conceptual collection of services provided to the layers above and below it. The OSI Model also defines a logical network and effectively describes computer packet transfer by using different layer protocols. The OSI Model may also be referred to as the seven-layer OSI Model or the seven-layer model. In some embodiments, a first layer may be a physical layer. In some embodiments, a second layer may be a Medium Access Control (MAC) layer. In some embodiments, a third layer may be a Radio Link Control (RLC) layer. In some embodiments, a fourth layer may be a Packet Data Convergence Protocol (PDCP) layer. In some embodiments, a fifth layer may be a Radio Resource Control (RRC) layer. In some embodiments, a sixth layer may be a Non Access Stratum (NAS) layer or an Internet Protocol (IP) layer, and the seventh layer being the other layer.

## 2. Systems and Methods for Positioning Using Multiple Frequency Layers

To improve positioning accuracy, a positioning reference signal (PRS) transmitted in multiple frequency layers can be aggregated. One signaling (e.g., downlink control information (DCI) or media access control control element (MAC-CE) may be to schedule a positioning reference signal (RS) resource with resource identifier (ID) = i, resource set ID = i, in frequency layer#x and schedule another positioning reference signal (RS) resource or resource set with ID = i in another frequency layer #y. The frequency layer #x and frequency layer #y may be associated or may be in the same frequency layer group.

The UE may report UE capabilities for both single layer PRS processing and aggregated frequency layers processing for a band. The capability for single layer and F aggregated layers may satisfy several conditions (e.g., NF < N, TF>T). The UE capability or configured parameters for aggregated FLs also can be determined by that for single layer FL (e.g., the processing duration KF = F'*K).

Positioning service may very common among users in outdoor or indoor. In outdoor scenarios, GPS can be used for positioning. In indoor scenarios, GPS signal power may be too weak to get accurate positioning estimation. To account for these shortcomings, wireless dependent positioning solutions can be used, such as timing difference based positioning solution. The frequency layer of positioning reference signal, however, may be transmitted in a single frequency layer that has limited bandwidth, and further cause limitations with accuracy.

*A. Scheduling Grant to Schedule Multiple Resource Sets in Different Carriers*

To improve positioning accuracy, larger bandwidth for positioning reference signal (RS) may be used. One solution may be to aggregate positioning RS reception in multiple frequency layer. One frequency layer can also be a serving cell or component carrier. For aperiodic or semi-persistent positioning RS, physical layer signaling (e.g., DCI or MAC CE) may be to trigger or activate the positioning RS.

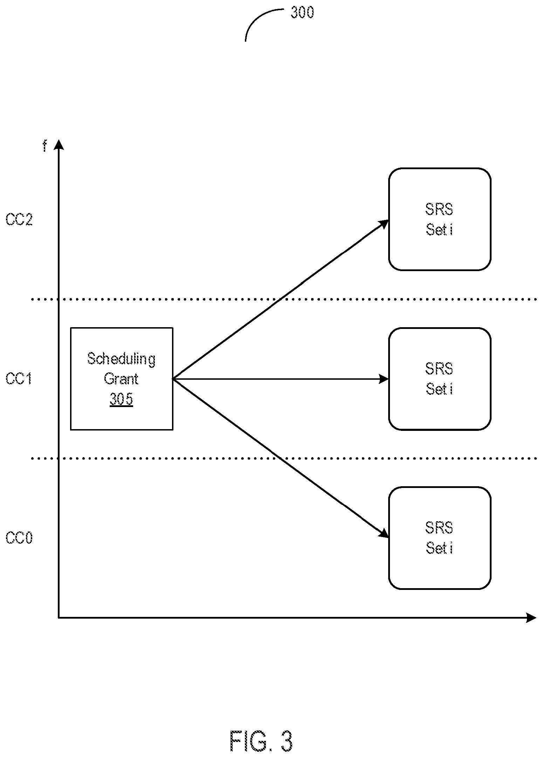

Referring now to FIG. 3, depicted is a block diagram of a specification 300 of a scheduling grant 305 from a wireless communication node to schedule multiple resource sets in different carriers with same resource set identifiers for positioning. For saving signaling overhead, one signaling (e.g., a DCI or a MAC CE) may be to schedule a positioning RS resource with resource ID=i or resource set with resource set ID=i in a frequency layer #x, and another positioning RS resource with resource ID=i or resource set with resource set ID=i may also be scheduled by signaling in another frequency layer #y. Frequency layer #x and frequency layer #y may be associated or may be in the same frequency layer group.

In other words, single signaling (e.g., a DCI or a MAC CE) can be used to schedule a plurality of positioning RS resources or resource sets in all frequency layers of a frequency layer group. The positioning RS resources in different frequency layers may have the same resource ID. The positioning RS resource sets in different frequency layers scheduled by the single signaling may also have the same resource set ID. Further, the bandwidth part (BWP) ID of these positioning RS resource or resource sets scheduled by the signaling may be the same. As shown, one scheduling grant (e.g., a DCI or MAC CE) from a wireless communication node (e.g., BS or gNB) may be to schedule multiple SRS resource sets in different carriers with the same resource set ID for positioning.

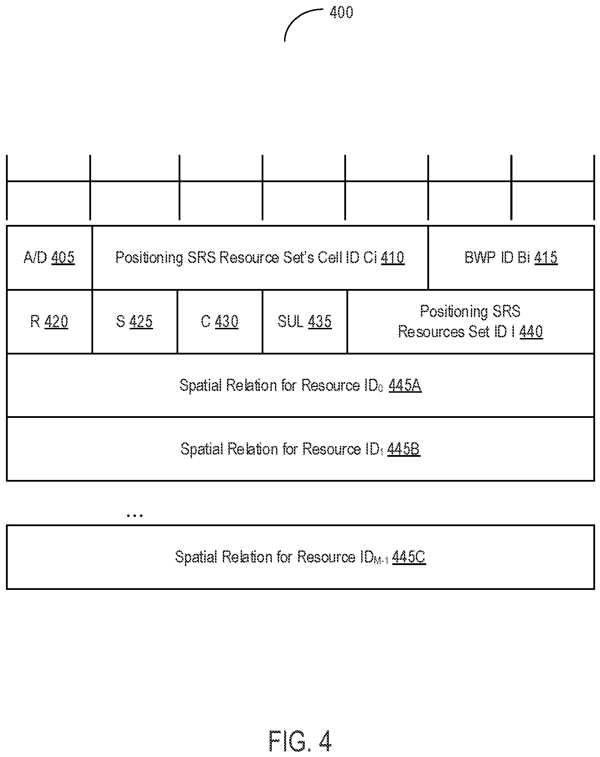

Referring now to FIG. 4, depicted is a block diagram of a media access control control element (MAC-CE) 400 for positioning sounding reference signals (SRS) activation or deactivation. For semi-persistent SRS resource set for positioning, one MAC-CE may be to activate a positioning SRS resource set as shown (e.g., based on the 3G GPP TS 38.321). The stationary peer (SP) Positioning SRS Activation or Deactivation MAC CE may be identified by a MAC subheader with an extended logical channel identifier (eLCID) (e.g., as specified in Table 6.2.1-1b). The MAC-CE may have a variable size with the following fields.

A/D field 405 may indicate whether to activate or deactivate indicated SP positioning SRS resource set. The field may be set to 1 to indicate activation, otherwise the field may indicate deactivation.

Positioning SRS Resource Set's Cell ID field 410 may indicate the identity of the Serving Cell Ci. The Serving Cell Ci 410 may contain activated or deactivated SP Positioning SRS Resource Set i. If the Ci field i410 s set to 0, this field also may indicate the identity of the Serving Cell. The Serving Cell field 410 may contain all resources indicated by the Spatial Relation for Resource IDi fields, if present. The length of the field may be 5 bits.

C field 430 may indicate whether the octets containing Resource Serving Cell ID field(s) 410 and Resource BWP ID field(s) 415 withn the field Spatial Relation for Resource ID i are present, except for Spatial Relation Resource IDi 445A-N with DL-PRS or SSB. When A/D field 405 is set to 1, if the C field 430 is set to 1, the octets containing Resource Serving Cell ID field(s) 410 and Resource BWP ID field(s) 415 in the field Spatial Relation for Resource IDi may be present. Otherwise if the field is set to 0, they may be not present. When A/D field 405 is set to 0, the C field 430 may be always set to 0 that they are not present.

SUL field 435 may indicate whether the MAC CE 400 applies to the NUL carrier or SUL carrier configuration. This field may be set to 1 to indicate that it applies to the SUL carrier configuration, and the field may be set to 0 to indicate that the MAC-CE 400 applies to the NUL carrier configuration.

Positioning SRS Resource Set ID I field 440 may indicate the SP Positioning SRS Resource Set identified by SRS-PosResourceSetId = i, which is to be activated or deactivated. The length of the field may be 4 bits.

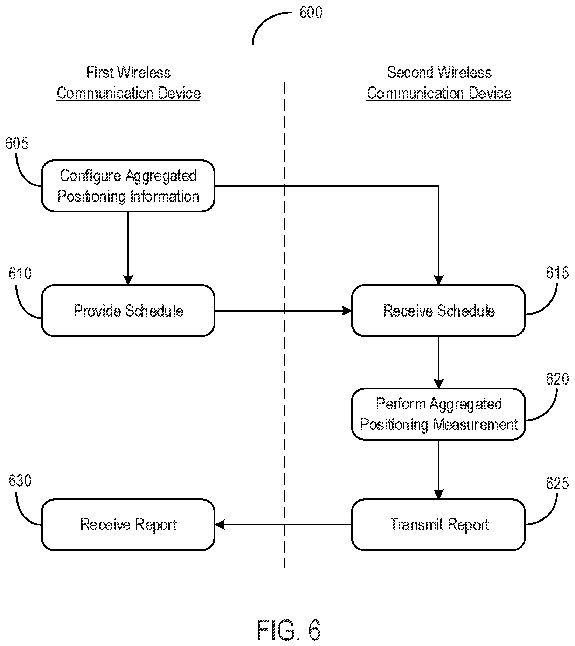

Spatial Relation for Resource Idi 445A-N field for Resource IDi may be only present if MAC CE is used for activation (e.g., the A/D field 405 may be set to 1). M may be the total number of Positioning SRS resource(s) configured under the SP Positioning SRS resource set indicated by the field Positioning SRS Resource Set ID. There may be four types of Spatial Relation for Resource IDi, which is indicated by the F (F0 and F1) field within. The fields within Spatial Relation for Resource IDi may be (e.g., as shown in Figures 6.1.3.36-2 to 6.1.3.36-5) for the 4 types of Spatial Relations for Resource IDi.

S field 425 may indicate whether the fields Spatial Relation for Resource IDi for the positioning SRS resource i within the positioning SRS resource set are present. If the field is set to 1, the fields Spatial Relation for Resource IDi may be present; otherwise, they may be absent. In addition, R Reserved bit 420 may be set to 0.

Thus, the enhancement may be that the MAC CE is also to activate or deactivate SRS resource sets with set ID = i in some serving cells or CCs associated with serving cell Ci. The association can be configured by higher layer signaling (e.g., RRC signaling) or signaling informed by a location management function (LMF). Further, the BWP ID of these SRS resource sets in the associated serving cells (a group of carrier components (CCs)) can be the same. Thus, one MAC CE may be used to activate or deactivate the SRS resource sets for positioning with the same set ID and same BWP ID in a group of CCs. In other words, N SRS resource sets for positioning with the same resource set ID, BWP ID can be activated or deactivated by a single MAC CE. The MAC-CE may indicate single SRS resource set ID, BWP ID, and CC ID.

For more flexibility, the association or CC group can be configured per SRS resource set or per CC or per frequency layer. For example, for a SRS resource set i in serving cell (or frequency layer or CC) Ci, a first group of CC index can be configured. For a SRS resource set j in serving cell (or frequency layer or CC) Cj, a second group of CC index can be configured. In this notation, i may not be equal to j or Ci may not be equal to Cj. For example, i may not be equal to j, but Ci=Cj. If the SRS resource set i in Ci is scheduled, all SRS resource sets with set ID=i in the first group of CCs may be scheduled and transmitted. If the SRS resource set j in Cj=Ci is scheduled, all SRS resource sets with set ID=j in the second group of CCs may be scheduled and transmitted. In other words, CC group may be separately configured for different SRS resource sets.

In some embodiments, CC group may be separately configured for different CCs or frequency layers. For serving cell (or frequency layer or CC) Ci, a first group of CC index can be configured. For serving cell (or frequency layer or CC) Cj, a second group of CC index can be configured. If a SRS resource set i in Ci is scheduled, all SRS resource sets with set ID=i in the first group of CCs may be scheduled and transmitted. If the SRS resource set j in Cj is scheduled, all SRS resource sets with set ID=j in the second group of CCs may be scheduled and transmitted.

A similar approach can be also used for other RS including downlink (DL) positioning RS. For DL positioning RS, serving cell or CC may be replaced by frequency layer. Based on the approach, one scheduling grant may be used to trigger or schedule multiple RS resource sets in different frequency layers or carriers. Subcarrier spacing in different frequency layers or carriers, however, can be different.

The timing offset between the scheduling grant and the positioning RS transmission in each frequency layer or CC may be based on at least one of the following parameters: the largest or smallest subcarrier spacing among frequency layers in the frequency layer group; and the largest or smallest values among the configured or indicated timing offset for positioning RS transmissions in the frequency layer group. For example, a DCI in slot n may trigger two positioning RS resource sets both with set ID i in CC0 and CC1. In this case, the slot offset configured for RS resource set in CC0 is k1, the slot offset configured for RS resource set in CC1 may be k2. The subcarrier spacing of CC0 may be smaller than that of CC1. In such a case, the smallest subcarrier spacing of CC0 and CC1 may be used to determine timing offset between the DCI and the transmission of the two RS resource sets. That means, the subcarrier spacing of CC0 may be used to determine the duration of both k1 and k2.

*B. UE Capability Reporting*

For a UE to support positioning measurement in a frequency layer f in a band b, UE may report some UE capabilities to the network (e.g., LMF or gNB). The UE capabilities per band may include one or more of following parameters.

Maximum bandwidth B supported by UE can be reported separately for FR1 band and FR2 band. For example, maximum 80MHz may be supported and reported by UE for a FR1 band b, and 200MHz may be supported and reported by UE for a FR2 band b.

DL PRS buffering capability parameter (e.g., Type 1 or Type 2) may be also be reported. Type 1 may sub-slot or symbol level buffering. Type 2 may be slot level buffering.

Combination of (N, T) values may also be report. N may be a duration of DL PRS symbols in ms processed every T ms for a given maximum bandwidth B in MHz supported by UE. Duration of DL PRS symbols N in units of ms a UE can process every T ms assuming maximum DL PRS bandwidth in MHz supported and reported by UE. T may include, for example, {8, 16, 20, 30, 40, 80, 160, 320, 640, 1280} ms. N may include, for example,{0.125, 0.25, 0.5, 1, 2, 4, 6, 8, 12, 16, 20, 25, 30, 32, 35, 40, 45, 50} ms.

Max number of DL PRS resources R that UE can process in a slot may also be reported. R may be different for different subcarrier spacing (SCS), and also different for a FR1 band or FR2 band.

The UE may report the capability signaling as described above. On the other hand, the LMF may configure the positioning RS(PRS). For the purpose of DL PRS processing capability, the duration $K\,ms$ of DL PRS symbols within $P\,ms$ window corresponding to the maximum PRS periodicity in a positioning frequency layer, is calculated by Type 1 duration calculation with UE symbol level buffering capability:

$$K = \sum_{(s \in S)} (K_s)$$

$$K_s = T_S^{end} - T_S^{start}$$

Type 2 duration calculation with UE slot level buffering capability:

$$K = \frac{1}{2^\mu}|S|$$

Where S is the set of slots based on the numerology of the DL PRS of a serving cell within the $P$ msec window in the positioning frequency layer that contains potential DL PRS resources. For Type 1, $\left[T_S^{start}, T_S^{end}\right]$ may be the smallest interval in ms within slot s corresponding to an integer number of OFDM symbols based on the numerology of the DL PRS of a serving cell that covers the union of the potential PRS symbols and determines the PRS symbol occupancy within slot s. For Type 2, $\mu$ may be the numerology of the DL PRS.

Furthermore, (K, P) may mean that the UE is to process PRS of K ms duration within a window with P ms period. K and P may depend on the PRS configuration. Assuming P is the same as UE capability T, if K <= UE capability N, then UE can process all K ms duration of PRS. However, if K > N, UE may not be able to process K ms PRS within window P. For example, K = 2N, UE may process all K ms PRS within 2P window since the configured PRS measurement is beyond UE capability.

For a UE to support positioning measurement in F(F>=1) aggregated frequency layers, UE may receive and measure F positioning RS resources in F frequency layers simultaneously. For simplicity and positioning measurement accuracy, F frequency layers may be in one frequency band (e.g. in a band b).

I. Complexity in UE Processing

One issue may be that when the UE processes PRS simultaneously in F aggregated frequency layers in a band f, the UE cost and UE complexity may be higher than the processing in a single frequency layer. Thus, the UE capabilities for a single layer PRS processing and F aggregated frequency layers PRS processing may be different. Although the UE can be configured with multiple frequency layers, one can be configured by UE at a given time. Therefore, the UE capabilities for both single layer PRS processing and F frequency layer processing may be cleared for both network side and UE side.

a. Reporting UE Capabilities for Single Layer PRS Processing and Aggregated Frequency Layer

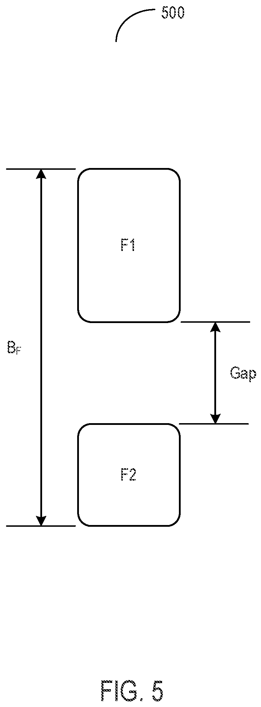

Referring now to FIG. 5, depicted is a block diagram of a bandwidth 500 with a frequency gap between multiple frequency layers. In some embodiments, the UE capabilities may be reported for both single layer PRS processing and F aggregated frequency layer processing for a given band. For single layer PRS processing, the UE capability may be as aforementioned. For multiple aggregated frequency layer processing, the UE capabilities per band may include one or more of following parameters that can be reported:

The parameter may identify a maximum bandwidth $B_F$ supported by UE for more one than one frequency layer aggregation. This parameter is larger than B. This parameter may include the gap length between two frequency layers. Thus, the $B_F$ may indicate the maximum bandwidth UE supported including the bandwidth of frequency layers and the gap(s) among frequency layers. This may be because the total bandwidth including gap also cost UE complexity if UE add zeros between two non-contiguous frequency layers.

Furthermore, the parameter may not include the gap length between two frequency layers. Thus, the $B_F$ may indicate the maximum bandwidth UE can support which is the sum of the bandwidth of multiple frequency layers without considering the gap among frequency layers. In such a case, the UE may not add zero when UE perform an inverse fast Fourier transform (IFFT) operation for multiple frequency layers measurement.

The parameter may also identify the maximum number of frequency layers F. The UE can support aggregated measurement for maximum F frequency layers.

The parameters may also include a combination of $(N_F, T_F)$ values. $N_F$ may be a duration of DL PRS symbols in ms processed every $T_F$ ms for a given maximum bandwidth $B_F$ in MHz supported by UE. Duration of DL PRS symbols $N_F$ in units of ms a UE can process every $T_F$ ms assuming maximum DL PRS bandwidth in MHz supported and reported by UE as $B_F$. Since multiple frequency layer aggregated measurement costs more UE complexity and memory, UE processing capability may be worse than that for single layer. Thus, the following one or more conditions should be satisfied: $N_F <= N$ or $N_F < N$; and $T_F >= T$ or $T_F > T$.

The parameter may identify a maximum number of DL PRS resources $R_F$ that UE can process in a slot. Since UE measures PRS resources at a given time in different frequency layers simultaneously probably by one receiver chain, PRS resources transmitted at the same time in F aggregated frequency layers can be assumed as one PRS resource. In addition, maximum number of DL PRS resources $R_F$ that UE can process in multiple aggregated frequency layers may count PRS resources in one of F aggregated frequency layers. Since the multiple frequency layer aggregated measurement costs more UE complexity and memory, UE processing capability may be worse than that for single layer. Thus, $R_F <= R$ or $R_F < R$. If $R_F$ counts PRS resources in all aggregated frequency layers, there may be a condition that $R_F/F <= R$ or $R_F/F < R$; or $R_F <= R*F$ or $R_F < R*F$.

The parameter may identify a phase shift or timing shift among aggregated frequency layers. Since phase shift or timing shift between or among aggregated frequency layers impacts positioning measurement performance very much, one or more values of phase shift or timing shift among aggregated frequency layers can be reported. The reported phase shift or timing shift value(s) may include the maximum or minimum value UE can support. For smaller $B_F$ or F values, phase shift (or phase error) or timing shift (or timing error) among frequency layers may be smaller since the phase error or timing error UE is easily control by UE hardware. However, For larger $B_F$ or F values, phase shift (or phase error) or timing shift (or timing error) among frequency layers may be larger since the phase error or timing error UE is not easily control by UE hardware. Therefore, multiple phase shift or timing shift values can be reported where each is corresponding to one F value or $B_F$ value.

UE may report one or more combinations $(B_F, N_F, T_F)$ since processing capability $(N_F, T_F)$ may be different for different value $B_F$.

b. Partial Reporting of UE Capabilities

In some embodiments, some of parameters may be omitted from the reporting. For example, only F or $B_F$ (or a combination) may be reported by UE capability signaling for multiple aggregated frequency layer PRS measurement. In such case, the UE capability without signaling information to support multiple aggregated frequency layer PRS measurement may be defined as one or more of following.

$N_F$ may be determined based on N and at least one of F, $B_F$, and B. In some embodiments, $N_F = N/f(F)$ or $N_F = N*f(F)$, where f(x) is a function of x. For example, f(F) = F, so $N_F = N/F$. For another example, f(F) = scale*F, where scale is a fractional value (e.g. = 0.8). In some embodiments, $N_F = f(N, F)$. In some embodiments, $N_F = N*f(B_F,B)$. For example, $f(B_F,B) = B/B_F$, so $N_F = N*B/B_F$. In some embodiments, $N_F = f(N, B_F, B)$. In some embodiments, $N_F = N*f(F,B_F,B)$. In some embodiments, $N_F = f(F, B_F, B, N)$.

TF may be determined based on T and at least one of F, BF, and B. In some embodiments, TF = T*f(F). For example, f(F) = F, ergo TF = T*F. In some embodiments, TF = f(T,F). In some embodiments, TF = T*f(BF,B). For example, f(BF,B) = BF/B, ergo TF = T*BF/B. In some embodiments, TF = f(BF,B,T). In some embodiments, TF = T*f(F,BF,B). In some embodiments, TF = f(F,BF,B,T).

$R_F$ may be determined based R and at least one of F, $B_F$ and B. In some embodiments, $R_F = R*f(F)$. In some embodiments, $R_F = f(F,R)$. In some embodiments, $R_F = R*f(B_F,B)$. In some embodiments, $R_F = f(B_F,B,R)$. In some embodiments, $R_F = f(B_F,B,R)$. In some embodiments, $R_F = R*f(F,B_F,B)$. In some embodiments, $R_F = R*f(F,B_F,B)$. In some embodiments, $R_F = f(F,B_F,B,R)$.

The main motivation for the above predefined relationship may be to save signaling overhead. Since UE complexity and cost is higher for multiple aggregated frequency layer measurement, the processing capability compared with single layer frequency measurement may be lower. Thus, even based on the above predefined rule, the processing capability $N_F$ may be <= N, or $T_F <= T$, or $R_F <= R$.

II. Processing Calculation

a. Predefined Rule for UE Processing Capabilities

In some embodiments, some of parameters may be omitted from the reporting, and the predefined rule for UE processing capability may also be omitted. Specifically, F or $B_F$ may be reported by UE capability signaling for multiple aggregated frequency layer PRS measurement for a band. In such case, the duration $K_F$ *ms* of DL PRS symbols within *P ms* window for multiple aggregated frequency layer can be determined by K and at least one of F', $B_{F'}$, and B. K may be the duration *K ms* of DL PRS symbols within any *P ms* window for single layer PRS processing. F' may be configured number of aggregated frequency layers. F' may be a function of the configured number of aggregated frequency layers. For example, F' = 1 for single frequency layer PRS processing, and F' = factor (factor > 1) for multiple aggregated frequency layers PRS processing.

$B_{F'}$ may be configured bandwidth of multiple aggregated frequency layers which may or may not include gap among frequency layers. $B_{F'}$ may be a function of configured bandwidth of multiple aggregated frequency layers which may or may not include gap among frequency layers. B may be the maximum bandwidth reported by UE capability signaling for single frequency layer as mentioned above. Thus, $K_F$ can be a function of K and at least one of F', $B_{F'}$, B. For example, $K_F$ = F'*K. For another example, $K_F$ = K*f($B_{F'}$, B) (e.g., $K_F$ = K*$B_{F'}$/B).

III. Measurement Period Specifications

When multiple frequency layers are configured for some measurement (e.g., PRS measurement and RRM measurement) for PRS measurement in a positioning frequency layer i when measurement gaps and processing time T have overlap between different positioning frequency layers, total DL reference signal time difference (RSTD) measurement period $T_{RSTD,Total}$ may be defined as:

$$T_{RSTD,Total} = \Sigma_{i=1}^{L} T_{RSTD,i} + (L-1) = \max(T_{effect,i})$$

Where *i* is the index of positioning frequency layer, *L* is total number of positioning frequency layers, and $T_{effect,i}$ is the periodicity of PRS-RSTD measurement in positioning frequency layer i as defined further in this clause.

$T_{PRS-RSTD,i}$ may be the measurement period for PRS RSTD measurement in *i* positioning frequency layer as specified below:

$$T_{PRS-RSTD,i} = \left( CSSF_{PRS,i} * N_{RXBEAM,i} * \left\lceil \frac{N_{PRS,i}^{slot}}{N'} \right\rceil \left\lceil \frac{L_{PRS,i}}{N} \right\rceil \right) * (N_{sample} - 1) * T_{effect,i} + T_{last} ,$$

where $N_{RXBeam,i}$ is the UE Rx beam sweeping factor, $CSSF_{PRS,i}$ is the carrier-specific scaling factor for the positioning frequency layer *i*, $N_{sample}$ is the number of PRS RSTD samples., $T_{last}$ is the measurement duration for the last PRS RSTD sample, including the sampling time and processing time:

$$T_{last} = T_i + L_{PRS,i}$$

$$T_{effect,i} = \left\lceil \frac{T_i}{T_{availabl\_PRS,i}} \right\rceil * T_{availabl\_PRS,i}$$

$$T_{available\_PRS,i} = LCM (T_{PRS,i} MGRP_i),$$

the least common multiple between $T_{PRS,i}$ and $MGRP_i$, $L_{PRS}$ is the time duration, $N_{PRS,i}^{slot}$ is the maximum number of DL PRS resources in positioning frequency layer i configured in a slot, and *N'* is UE capability for number of DL PRS resources that it can process in a slot. That may be *R* (Max number of DL PRS resources R that UE can process in a slot).

For multiple aggregated frequency layers positioning measurement, F aggregated frequency layers can be assumed as one combined frequency layers. In such case, above formulas to calculate Total DL RSTD measurement period $T_{RSTD,Total}$ and the measurement period $T_{PRS-RSTD,i}$ for PRS RSTD measurement in *i* positioning frequency layer may not be changed. Specifically, one of F aggregated frequency layers can be a reference frequency layer for calculating and/or $T_{PRS-RSTD,i}$. Therefore, all other frequency layers may not be used for calculation of $T_{RSTD,Total}$ and/or $T_{PRS-RSTD,i}$.

*C. Reporting Transmission Reception Point (TRP) Identifier (ID)*

In single frequency layer PRS measurement, UE may report TRP ID (*dl-PRS-ID-r16),* PRS resource ID(s), or PRS resource set ID to determine the reference or for positioning measurement.

The UE may be indicated by the network that a set of downlink (DL) PRS resources can be used as the reference for the *DL RSTD, DL PRS-RSRP,* and UE Rx-Tx time difference measurements in a higher layer parameter *nr-DL-PRS-ReferenceInfo-r16.* The reference indicated by the network to the UE can also be used by the UE to determine how to apply higher layer parameters *nr-DL-PRS-expectedRSTD-r16* and *nr-DL-PRS-expectedRSTD-uncerainty-r16.*

The UE may expect the reference to be indicated whenever the UE is expected to receive the DL PRS. This reference provided by *nr-DL-PRS-ReferenceInfo-r16* may include an *dl-PRS-ID-r16,* a DL PRS resource set ID, and optionally a single DL PRS resource ID or a list of DL PRS resource IDs. The UE may use different DL PRS resources or a different DL PRS resource set to determine the reference for the RSTD measurement as long as the condition that the DL PRS resources used belong to a single DL PRS resource set is met. If the UE chooses to use a different reference than indicated by the network, then the UE may be expected to report the dl-PRS-ID-r16, the DL PRS resource ID(s) or the DL PRS resource set ID used to determine the reference.

The UE may be configured to report quality metrics corresponding to the DL RSTD and UE Rx-Tx time difference measurements which include the following fields: (a) *timingQualityValue-r16* which provides the best estimate of the uncertainty of the measurement; *(b) timingQualityResolution-r16* which specifies the resolution levels used in the *timingqualityValue-r16* field.

The UE may expect to be configured with higher layer parameter *nr-DL-PRS-expectedRSTD-r16,* that defines the time difference with respect to the received DL subframe timing the UE is expected to receive *DL PRS, and DL-PRS-expectedRSTD-uncertainty-r16,* which defines a search window around the *nr-DL-PRS-expectedRSTD-r16.*

For DL UE positioning measurement reporting in higher layer parameters *NR-DL-TDOA-SignalMeasurementInformation* or *NR-Multi-RTT-SignalMeasurementInformation,* the UE can be configured to report the DL PRS resource ID(s) or the DL PRS resource set ID(s) associated with the DL PRS resource(s) or the DL PRS resource set(s) that are used in determining the UE measurements DL RSTD, UE Tx-Rx time difference.

For the DL RSTD, DL PRS-RSRP, and UE Rx-Tx time difference measurements the UE can report an associated higher layer parameter *nr-TimeStamp-r16.* The *nr-TimeStamp-r16* parameter can include the SFN and the slot number for a subcarrier spacing. These values may correspond to the reference which is provided by *nr-DL-PRS-ReferenceInfo-r16.*

In the case when multiple aggregated frequency layers positioning measurement and report, for determination of the reference or for positioning measurement or for time *stamp(nr-TimeStamp-r16)* report, UE can only report TRP ID (*dl-PRS-ID-r16*), PRS resource ID(s) , PRS resource set ID, or time stamp from one frequency layer of multiple configured aggregated frequency layers. That is, one frequency layer of multiple configured aggregated frequency layer can be assumed as the reference frequency layer of others. The configured or report parameters corresponding to the reference frequency layer can be used for all aggregated FLs.

In summary, for multiple aggregated frequency layers positioning measurement and report, one frequency layer can be configured or predefined or reported as the reference frequency layer of others. The reference FLs can be more than one, but should be fewer than the number of configured aggregated FLs.

The UE may be indicated by the network that DL PRS resource(s) only from the reference FL(frequency layer) can be used as the reference for the measurements of DL RSTD, DL PRS-RSRP (reference signal received power), and UE Rx-Tx time difference measurements. The indicated resource(s) can be the reference for all aggregated FLs.

The UE may report the *dl-PRS-ID-r16,* the DL PRS resource ID(s) or the DL PRS resource set ID only from the reference FL used to determine the reference. The determined reference can be used for all aggregated FLs. The UE may report a time stamp only from the reference FL. The time stamp can be used for all aggregated FLs.

I. Priority Rules

As discussed above, UE capability signaling may include F or $B_F$ corresponding maximum number of aggregated frequency layers and maximum bandwidth of aggregated frequency layers supported by the UE. However, network may configure F' frequency layers or configured $B_F$, bandwidth for aggregated frequency layers where F'>F or $B_{F'}$>$B_F$. That may be because PRS configuration may be broadcast information which is shared among many UEs.

To enable efficient positioning measurement, one approach may be to let UE decide which subset of F' frequency layers or which subset of bandwidth $B_{F'}$ is measured. In order to let network know the measurement bandwidth or frequency layers, UE may report which subset of F' frequency layers or which subset of bandwidth $B_{F'}$ is measured. In some embodiments, UE may report a list of identifiers (IDs) or identities of FLs. In some embodiments, UE may report multiple PRS resource set IDs that are in different FLs from the configured FLs. Since set ID is unique among different FLs, the subset of F' frequency layers can be identified by a list of PRS resource set IDs. Specifically, for each positioning measurement, UE may report multiple PRS resource set ID which are from different aggregated frequency layers.

If multiple non-aggregated frequency layers are configured to a UE, UE may only select one FL to measure and report the measurement result. If the number of configured PRS resource sets or resources or TRPs(dl-PRS-ID) in the selected FL is over than UE capability, UE may drop the PRS resource set or resources or TRPs with lower priority. For instance, within a positioning frequency layer, the DL PRS resources may be sorted in the decreasing order of priority for measurement to be performed by the UE, with the reference indicated by *nr-DL-PRS-ReferenceInfo* being the highest priority for measurement.

The following priority may be assumed. Up to 64 *dl-PRS-IDs* of the frequency layer may be sorted according to priority. Up to 2 DL PRS resource sets per dl-PRS-ID of the frequency layer may be sorted according to priority. In real positioning configuration, either aggregated frequency layers or non-aggregated frequency layers can be configured to a UE. The definition of the drop rule may be unclear.

One approach may be to assume the associated aggregated frequency layers as one combined FL. The priority rule in the combined FL can be the same as a single FL. The PRS resource or resource set or TRP in multiple layers that needs to be aggregated may have the same priority. The combined FL can be predefined with highest or lowest priority than single layer FL measurement.

If multiple combined FL are configured, one approach may be to make a dedicated combined FL with higher priority. In some embodiments, the dedicated combined FL may have a larger number of FLs or less number of FLs. In some embodiments, the dedicated combined FL may have larger aggregated bandwidth or less aggregated bandwidth. In some embodiments, the dedicated combined FL may have less phase shift or timing shift among FLs.

*D. Process for Positioning Using Multiple Frequency Layers*

Referring now to FIG. 6, depicted is a flow diagram of a method 600 positioning using multiple frequency layers. The method 600 may be implemented using or performed by any of the components described above, such as BS 102, UE 104, BS 202, and UE 204, among others. In brief overview, a first wireless communication device configures aggregated positioning information (605). The first wireless communication device provides a schedule (610). The second wireless communication device receives the schedule (615). The second wireless communication device may perform aggregated positioning measurement (620). The second wireless communication device transmits a report (625). The first wireless communication device receives the report (630).

In further detail, a first wireless communication device (e.g., BS 102, BS 202, and LMF) may generate, set, or otherwise configure first aggregated positioning information (605). The first aggregated positioning information is for a first aggregated positioning measurement in a first set of frequency layers. The first aggregated positioning information may define, specify, or identify a positioning reference signal (PRS) configuration to configure F' frequency layers or BF' bandwidth for aggregated frequency layers. The first aggregated positioning information is associated with at least one of the first set of frequency layers. In some embodiments, at least one of the first set of frequency layers may correspond to or may be a reference frequency layer for the other (remaining) frequency layers in the first set. The reference frequency layer may be used for the calculation of the first aggregated positioning measurement. In some embodiments, only positioning information of the reference frequency layer may be used as the first aggregated positioning information.

The first wireless communication device sends, transmits or otherwise provides a signaling for scheduling to a second communication device (e.g., UE 104 and UE 204) (610). In some embodiments, the signaling may identify or include a schedule for a first positioning reference signal (RS) resource with a first resource identifier (ID) or a first resource set with a first resource set ID=I, in a first frequency layer. In some embodiments, the signaling may identify or include a schedule for a second positioning RS resource with the first resource ID or a resource set with the first resource set ID, in a second frequency layer. The first frequency layer and the second frequency layer may be from the first set of frequency layers. In some embodiments, a bandwidth part (BWP) ID for the first RS resource or the first resource set, may be same as that for the second RS resource or the second resource set. In some embodiments, a bandwidth part (BWP) ID for the first RS resource or the first resource set, may different from the second RS resource set or the second resource set.

The second wireless communication device receives the signaling from the first wireless communication device (615). The signaling is for scheduling the second wireless communication device to perform the aggregated positioning measurement. Upon receipt, the second wireless communication device may parse the signaling to identify the scheduling. With the identification, the second wireless communication device may use the PRS resources in accordance with the scheduling. The scheduling may specify use of the first positioning reference signal (RS) resource with the first resource identifier (ID) or the first resource set with a first resource set ID=I, in the first frequency layer. In response, the second wireless communication device may activate first positioning reference signal (RS) resource as specified by the scheduling. The scheduling may specify use of the second positioning RS resource with the first resource ID or a resource set with the first resource set ID, in a second frequency layer as specified. In response, the second wireless communication device may activate the second positioning RS resource as specified.

The second wireless communication device may determine, carry out, or otherwise perform aggregated positioning measurement (620). In accordance with configuration and the scheduling, the second wireless communication device may perform the second aggregated positioning measurement in a second set of frequency layers. The second aggregated positioning information is a capability signaling for the second wireless communication device. The second aggregated positioning information may define, specify, or identify F' frequency layers corresponding to maximum number of aggregated frequency layers or BF' corresponding to maximum bandwidth of aggregated frequency layers supported by the second wireless communication device. In some embodiments, in performing the aggregated positioning measurement, the second wireless communication device may identify or determine the UE capability on a per frequency layer basis. In some embodiments, the UE capability may identify or include a maximum bandwidth (B), DL PRS buffering capability, combination of (N, T) values, maximum number of DL PRS resources supported by the second wireless communication device, among others. In some embodiments, the UE capability may identify or include a maximum bandwidth supported for one frequency layer aggregation, maximum number of frequency layers, combination of $(N_F, T_F)$ values, maximum number of DL PRS resources in a slot, and a phase shift or timing shift among the aggregated frequency layers, among others. In some embodiments, the UE capability may identify or include $N_F$, $T_F$, and $R_F$ values, among others. In some embodiments, in performing the measurement, the second wireless communication device may retrieve, determine, or otherwise the transmit reception identifier (TRP ID), PRS resource IDs, or PRS resource set IDs, and other related information, among others.

The second wireless communication device provides, sends, or otherwise transmits a report to the first wireless communication device (625). Using the second aggregated positioning information identified from the measurement, the first wireless communication device may determine or generate the report. The report includes second aggregated positioning information for the second aggregated positioning measurement in the second set of frequency layers. In some embodiments, in generating the report, the second wireless communication device may perform the aggregated positioning measured in the second set of frequency layers. In some embodiments, the second wireless communication device may send, provide, or otherwise transmit an indication of frequency layers or resources is to be used in measurements for the aggregated positioning measurement report to the first wireless communication device. The indication may identify or include a subset of the first set of frequency layers or a subset of a set of positioning resource set identifiers (PRS-ID). In some embodiments, the second wireless communication device may generate the indication using the second aggregated positioning information. With the generation, the second wireless communication device may transmit the indication as part of the aggregated positioning measurement report.

The reference frequency layer from the first set of frequency layers or the second set of frequency layers may be used to derive (by the first wireless communication device or the second wireless communication device) the positioning information. In some embodiments, the positioning information may identify or include a set of downlink (DL) positioning reference signal (PRS) resources. The set of DL PRS resources may be used as a reference for measurements of DL reference signal time difference (RSTD), DL PRS reference signal received power (PRS-RSRP), and UE reception-transmission (Rx-Tx) time difference. In some embodiments, the positioning information may identify or include a transmission-reception point (TRP) identifier (ID), one or more DL PRS resource IDs, or a DL PRS resource set ID, used to determine the reference for the measurements. In some embodiments, the positioning information may identify or include a time stamp parameter which includes a single frequency network (SFN) and a slot number for a subcarrier spacing (SCS). In some embodiments, the reference frequency layer may be used for calculating a total downlink (DL) reference signal time difference (RSTD) measurement period ($T_{RSTD,Total}$). In some embodiments, the reference frequency layer may be used for calculating a measurement period for DL positioning reference signal (PRS) reference signal received power ($T_{PRS-RSTD,i}$). In calculating, no other frequency layer of the first or the second plurality of frequency layers may be used.

The second aggregated positioning information of the report identifies or includes user equipment (UE) capability report. In some embodiments, the UE capability report may identify or include a maximum bandwidth ($B_F$) of an aggregate of the second set of frequency layers. In some embodiments, the $B_F$ may correspond to or include one or more frequency gaps among pairs of frequency layers in the second set of frequency layers. In some embodiments, the UE capability report may identify or include a maximum number of frequency layers (F) in the aggregate. In some embodiments, the UE capability report may identify or include a first duration ($N_F$) of downlink (DL) positioning reference signal (PRS) symbols in millisecond (ms) processed every second duration ($T_F$) in ms for the aggregate's measurement. In some embodiments, $N_F \leq N$ or $T_F \geq T$, and N may be a first duration of DL PRS symbols in ms processed every second duration (T) in millisecond (ms) for a single frequency layer's measurement. In some embodiments, the UE capability report may identify or include a maximum or minimum of phase shift or timing shift among frequency layers in the aggregate.

The second aggregated positioning information identifies or includes user equipment (UE) capability for an aggregated of the second set of frequency layers. The UE capability may be based on an UE capability report for a single frequency layer of the second set of frequency layers. For example, the reference frequency layer may be used to determine or generate the UE capability report. In some embodiments, in the UE capability report, $N_F$ may be determined according to N and at least one of F, $B_F$ or B. In some embodiments, $T_F$ may be determined according to T and at least one of F, $B_F$ or B. In some embodiments, $R_F$ may be determined according to R and at least one of F, $B_F$ or B. In some embodiments, $N_F$ may be a first duration of downlink (DL) positioning reference signal (PRS) symbols in millisecond (ms)

processed every second duration ($T_F$) in ms for the aggregate's measurement. In some embodiments, F may be a maximum number of frequency layers in the aggregate. In some embodiments, N may be a first duration of DL PRS symbols in ms processed every second duration (T) in ms for one frequency layer's measurement. In some embodiments, B may be a maximum bandwidth of the one frequency layer. In some embodiments, $B_F$ may be a maximum bandwidth ($B_F$) of an aggregate of the second plurality of frequency layers.

In some embodiments, the DL PRS may be used as the reference to determine or perform the aggregated positioning measurement. In some embodiments, a duration $K_F$ in millisecond (ms) of downlink (DL) positioning reference signal (PRS) symbols within a time window (P) in ms for an aggregate of frequency layers from the first or second plurality of frequency layers, may be determined by K and at least one of F', $B_F$' or B. In some embodiments, $K_F$ = F'*K. In some embodiments, $K_F$ is K may be multiplied by a function of $B_F$' and B. In some embodiments, K may be a duration in ms of DL PRS symbols within a time window in ms for one frequency layer's PRS processing. In some embodiments, F may be a maximum number of frequency layers in the aggregate. In some embodiments, F' may be a configured number of frequency layers in the aggregate, or a function of the configured number of frequency layers. In some embodiments, $B_F$' may be a configured bandwidth of the aggregate, a function of the configured bandwidth. In some embodiments, B may be a maximum bandwidth of the one frequency layer.

The first wireless communication device receives the report from the second wireless communication device (630). Upon receipt, the first wireless communication device may parse the report to identify the second aggregated positioning information. From the report, the second aggregated positioning information may be associated with at least one of the second set of frequency layers. The second aggregated positioning information may be associated with at least one of the second set of frequency layers. In some embodiments, at least one of the second set of frequency layers may correspond to or may be a reference frequency layer for the other (remaining) frequency layers in the second set. The reference frequency layer may be used for the calculation of the aggregated positioning measurement. In some embodiments, only positioning information of the reference frequency layer may be used as the second aggregated positioning information. In some embodiments, the first wireless communication device may retrieve, identify, or otherwise receive the indication of frequency layers or resources is to be used in measurements for the aggregated positioning measurement report from the second wireless communication device. The indication may identify or include the subset of the first set of frequency layers or the subset of a set of positioning resource set identifiers (PRS-ID). In some embodiments, the first wireless communication device may receive the indication as part of the report from the second wireless communication device.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the embodiments described in this disclosure will be readily apparent to those skilled in the art, and the general principles defined herein can be applied to other embodiments without departing from the scope of this disclosure. Thus, the disclosure is not intended to be limited to the embodiments shown herein, but is to be accorded the widest scope consistent with the novel features and principles disclosed herein, as recited in the claims below.

**Claims**

1.  A method comprising:

    configuring, by a first communication device, for a second communication device, a first aggregated positioning information for aggregated positioning measurement in a first plurality of frequency layers;
    transmitting, by the first communication device to the second communication device, a signaling to schedule the aggregated positioning measurement; and
    receiving, by the first communication device from the second communication device, a report comprising a second aggregated positioning information for aggregated positioning measurement in a second plurality of frequency layers, wherein the second aggregated positioning information comprises user equipment, UE, capability for an aggregate of the second plurality of frequency layers, and is based on a UE capability report for at least one of the second plurality of frequency layers,
    wherein the first aggregated positioning information is associated with at least one of the first plurality of frequency layers, and the second aggregated positioning information is associated with at least one of the second plurality of frequency layers.

2.  The method of claim 1, wherein:

    one of the first or the second plurality of frequency layers is a reference frequency layer of other frequency layers of the first plurality of frequency layers or the second plurality of frequency layers, and
only positioning information of the reference frequency layer is used as the first aggregated positioning information or the second aggregated positioning information.

3. The method of claim 2, wherein the positioning information of the reference frequency layer includes as least one of:

a set of downlink, DL, positioning reference signal, PRS, resources to be used as a reference for measurements of DL reference signal time difference, RSTD, DL PRS reference signal received power, PRS-RSRP, and UE reception-transmission, Rx-Tx, time difference;
a transmission-reception point, TRP, identifier, ID, one or more DL PRS resource IDs, or a DL PRS resource set ID, used to determine the reference for the measurements; or
a time stamp parameter which includes a single frequency network, SFN,) and a slot number for a subcarrier spacing, SCS.

4. The method of claim 1, comprising:
receiving, by the first communication device from the second communication device, an indication that a subset of the first plurality of frequency layers, or a subset of a first plurality of positioning resource set identifiers, IDs, configured by the first communication device, is to be measured for the aggregated positioning measurement report.

5. The method of claim 1, wherein the UE capability report comprising at least one of:

a maximum bandwidth, $B_F$, of an aggregate of the second plurality of frequency layers;
a maximum number of frequency layers, F, in the aggregate;
a first duration, $N_F$, of downlink, DL, positioning reference signal, PRS, symbols in millisecond, ms, processed every second duration, $T_F$, in ms for the aggregate's measurement; or
a maximum or minimum of phase shift or timing shift among frequency layers in the aggregate.

6. The method of claim 5, wherein:

the $B_F$ includes one or more frequency gaps among pairs of frequency layers in the second plurality of frequency layers; or
$N_F \leq N$ or $T_F \geq T$, and N is a first duration of DL PRS symbols in ms processed every second duration, T, in millisecond, ms, for a single frequency layer's measurement.

7. The method of claim 5, wherein at least one of:

$N_F$ is determined according to N and at least one of F, $B_F$ or B;
$T_F$ is determined according to T and at least one of F, $B_F$ or B; or
$R_F$ is determined according to R and at least one of F, $B_F$ or B; and
wherein:

$N_F$ is a first duration of downlink, DL, positioning reference signal, PRS, symbols in millisecond, ms, processed every second duration, $T_F$, in ms for the aggregate's measurement,
F is a maximum number of frequency layers in the aggregate,
N is a first duration of DL PRS symbols in ms processed every second duration, T, in ms for one frequency layer's measurement, and
B is a maximum bandwidth of the one frequency layer,
$B_F$ is a maximum bandwidth, $B_F$, of an aggregate of the second plurality of frequency layers.

8. The method of claim 1, wherein:

a duration $K_F$ in millisecond, ms, of downlink, DL, positioning reference signal, PRS, symbols within a time window, P, in ms for an aggregate of frequency layers from the first or second plurality of frequency layers, is determined by using K and at least one of F', $B_F$' or B; and
wherein:

K is a duration in ms of DL PRS symbols within a time window in ms for one frequency layer's PRS processing,
F is a maximum number of frequency layers in the aggregate,

F' is a configured number of frequency layers in the aggregate, or a function of the configured number of frequency layers,

$B_F'$ is a configured bandwidth of the aggregate, a function of the configured bandwidth, and

B is a maximum bandwidth of the one frequency layer.

9. The method of claim 8, wherein:

$$K_F = F'^*K;$$

or
$K_F$ is K multiplied by a function of $B_F'$ and B.

10. The method of claim 2, wherein the reference frequency layer is used for calculating at least one of: a total downlink, DL, reference signal time difference, RSTD, measurement period, $T_{RSTD,Total}$, or a measurement period for DL positioning reference signal, PRS, reference signal received power, $T_{PRS-RSTD,i}$, and no other frequency layer of the first or the second plurality of frequency layers are used.

11. The method of claim 1, comprising:
transmitting, by the first communication device to the second communication device, the signaling that schedules at least:

a first positioning reference signal, RS, resource with a first resource identifier, ID, or a first resource set with a first resource set ID, in a first frequency layer, and

a second positioning RS resource with the first resource ID or a resource set with the first resource set ID, in a second frequency layer, wherein the first frequency layer and the second frequency layer are from the first plurality of frequency layers.

12. A method comprising:

receiving, by a second communication device, a signaling to schedule an aggregated positioning measurement from a first communication device; and

transmitting, by the second communication device to the first communication device, a report comprising a second aggregated positioning information for aggregated positioning measurement in a second plurality of frequency layers, wherein the second aggregated positioning information comprises user equipment, UE, capability for an aggregate of the second plurality of frequency layers, and is based on a UE capability report for at least one of the second plurality of frequency layers,

wherein the first communication device configures a first aggregated positioning information for aggregated positioning measurement in a first plurality of frequency layers, and

wherein the first aggregated positioning information is associated with at least one of the first plurality of frequency layers, and the second aggregated positioning information is associated with at least one of the second plurality of frequency layers.

13. A first communication device (102/202) comprising:
at least one processor configured to:

configure, for a second communication device (104/204), a first aggregated positioning information for aggregated positioning measurement in a first plurality of frequency layers;

transmit, a signaling to schedule an aggregated positioning measurement to the second communication device (104/204); and

receive, via a receiver from the second communication device (104/204), a report comprising a second aggregated positioning information for aggregated positioning measurement in a second plurality of frequency layers, wherein the second aggregated positioning information comprises user equipment, UE, capability for an aggregate of the second plurality of frequency layers, and is based on a UE capability report for at least one of the second plurality of frequency layers,

wherein the first aggregated positioning information is associated with at least one of the first plurality of frequency layers, and the second aggregated positioning information is associated with at least one of the second plurality of frequency layers.

14. A second communication device (104/204) comprising:
    at least one processor configured to:

    receive a signaling to schedule an aggregated positioning measurement from a first communication device (102/202); and
    transmit, via a transmitter to the first communication device (102/202), a report comprising a second aggregated positioning information for aggregated positioning measurement in a second plurality of frequency layers, wherein the second aggregated positioning information comprises user equipment, UE, capability for an aggregate of the second plurality of frequency layers, and is based on a UE capability report for at least one of the second plurality of frequency layers,
    wherein the first communication device (102/202) configures a first aggregated positioning information for aggregated positioning measurement in a first plurality of frequency layers, and
    wherein the first aggregated positioning information is associated with at least one of the first plurality of frequency layers, and the second aggregated positioning information is associated with at least one of the second plurality of frequency layers.

**Patentansprüche**

1. Verfahren, umfassend:

   Konfigurieren einer ersten aggregierten Positionsbestimmungsinformation für eine aggregierte Positionsbestimmungsmessung in einer ersten Vielzahl von Frequenzschichten durch eine erste Kommunikationsvorrichtung für eine zweite Kommunikationsvorrichtung;
   Übertragen einer Signalisierung durch die erste Kommunikationsvorrichtung an die zweite Kommunikationsvorrichtung zum Planen der aggregierten Positionsbestimmungsmessung; und
   Empfangen eines Berichts durch die erste Kommunikationsvorrichtung von der zweiten Kommunikationsvorrichtung, der zweite aggregierte Positionsbestimmungsinformationen für aggregierte Positionsbestimmungsmessungen in einer zweiten Vielzahl von Frequenzschichten umfasst, wobei die zweiten aggregierten Positionsbestimmungsinformationen Fähigkeiten der Benutzereinrichtung, UE, für eine Gesamtheit der zweiten Vielzahl von Frequenzschichten umfassen und auf einem UE-Fähigkeitsbericht für mindestens eine der zweiten Vielzahl von Frequenzschichten basieren,
   wobei die ersten aggregierten Positionsbestimmungsinformationen mit mindestens einer der ersten Vielzahl von Frequenzschichten verknüpft sind und die zweiten aggregierten Positionsbestimmungsinformationen mit mindestens einer der zweiten Vielzahl von Frequenzschichten verknüpft sind.

2. Verfahren nach Anspruch 1, wobei:

   eine der ersten oder der zweiten Vielzahl von Frequenzschichten eine Referenzfrequenzschicht anderer Frequenzschichten der ersten Vielzahl von Frequenzschichten oder der zweiten Vielzahl von Frequenzschichten ist, und
   nur Positionsbestimmungsinformationen der Referenzfrequenzschicht als die erste aggregierte Positionsbestimmungsinformation oder die zweite aggregierte Positionsbestimmungsinformation verwendet werden.

3. Verfahren nach Anspruch 2, wobei die Positionsbestimmungsinformationen der Referenzfrequenzschicht mindestens eines einschließen von:

   einer Reihe von Downlink-, DL, Positionsbestimmungs-Referenzsignal, PRS, Ressourcen, die als Referenz für Messungen der DL Referenzsignalzeitdifferenz, RSTD, der Empfangsleistung des DL-PRS-Referenzsignals, PRS-RSRP, und der UE-Empfangs-/Übertragungszeitdifferenz, Rx-Tx-Zeitdifferenz, verwendet werden sollen;
   einer Sendeempfangspunkt, TRP, -Kennung, -ID, einer oder mehreren DL-PRS-Ressourcen-IDs oder einer DL-PRS-Ressourcensatz-ID, die zum Bestimmen der Referenz für die Messungen verwendet wird; oder
   einem Zeitstempelparameter, der ein Einzelfrequenznetz, SFN, und eine Slot-Nummer für einen Unterträgerabstand, SCS, einschließt.

4. Verfahren nach Anspruch 1, umfassend:
   Empfangen einer Anzeige durch die erste Kommunikationsvorrichtung von der zweiten Kommunikationsvorrichtung, dass eine Teilmenge der ersten Vielzahl von Frequenzschichten oder eine Teilmenge einer ersten Vielzahl von Positionsbestimmungs-Ressourcensatzkennungen, Positionsbestimmungs-Ressourcensatz-IDs, die von der ersten Kommunikationsvorrichtung konfiguriert wurden, für den aggregierten Positionsbestimmungsmessbericht gemessen werden soll.

5. Verfahren nach Anspruch 1, wobei der Fähigkeitsbericht der UE mindestens eines umfasst von:

einer maximalen Bandbreite, $B_F$, einer Gesamtheit der zweiten Vielzahl von Frequenzschichten;
einer maximalen Anzahl von Frequenzschichten, F, in der Gesamtheit;
einer ersten Dauer, $N_F$, von Downlink-Positionsbestimmungsreferenzsignal-Symbolen, DL-PRS-Symbolen, in Millisekunden, ms, verarbeitet jede zweite Dauer, $T_F$, in ms für die Messung der Gesamtheit; oder
ein Maximum oder Minimum der Phasenverschiebung oder Zeitverschiebung zwischen den Frequenzschichten in der Gesamtheit.

6. Verfahren nach Anspruch 5, wobei:

das $B_F$ eine oder mehrere Frequenzlücken zwischen Paaren von Frequenzschichten in der zweiten Vielzahl von Frequenzschichten einschließt;
oder
$N_F \leq N$ oder $T_F \geq T$, und N eine erste Dauer von DL PRS-Symbolen in ms ist, die jede zweite Dauer, T, in Millisekunden, ms, für die Messung einer einzelnen Frequenzschicht verarbeitet werden.

7. Verfahren nach Anspruch 5, wobei mindestens eines zutrifft von:

$N_F$ wird bestimmt gemäß N und mindestens einem von F, $B_F$ oder B;
$T_F$ wird bestimmt gemäß T und mindestens einem von F, $B_F$ oder B; oder
$R_F$ wird bestimmt gemäß R und mindestens einem von F, $B_F$ oder B; und
wobei:

$N_F$ eine erste Dauer von Downlink-Positionsbestimmungsreferenzsignal-Symbolen, DL-PRS-Symbolen, in Millisekunden, ms, verarbeitet jede zweite Dauer, $T_F$, in ms für die Messung der Gesamtheit, ist,
F eine maximale Anzahl von Frequenzschichten in der Gesamtheit ist,
N eine erste Dauer von DL-PRS-Symbolen in ms ist, die jede zweite Dauer, T, in ms verarbeitet werden für die Messung einer Frequenzschicht, und
B eine maximale Bandbreite der einen Frequenzschicht ist,
$B_F$ eine maximale Bandbreite, $B_F$, einer Gesamtheit der zweiten Vielzahl von Frequenzschichten ist.

8. Verfahren nach Anspruch 1, wobei:

eine Dauer $K_F$ in Millisekunden, ms, von Downlink-Positionsbestimmungsreferenzsignal-Symbolen, DL-PRS-Symbolen, innerhalb eines Zeitfensters, P, in ms für eine Gesamtheit von Frequenzschichten aus der ersten oder zweiten Vielzahl von Frequenzschichten unter Verwendung von K und mindestens einem von F', $B_F'$ oder B bestimmt wird; und
wobei:

K eine Dauer in ms von DL-PRS-Symbolen innerhalb eines Zeitfensters in ms für die PRS-Verarbeitung einer Frequenzschicht ist,
F eine maximale Anzahl von Frequenzschichten in der Gesamtheit ist,
F' eine konfigurierte Anzahl von Frequenzschichten in der Gesamtheit oder eine Funktion der konfigurierten Anzahl von Frequenzschichten ist,
$B_F'$ eine konfigurierte Bandbreite der Gesamtheit, eine Funktion der konfigurierten Bandbreite ist, und
B eine maximale Bandbreite der einen Frequenzschicht ist.

9. Verfahren nach Anspruch 8, wobei:

$$K_F = F'*K;$$

oder

$K_F$ K multipliziert mit einer Funktion von $B_F'$ und B ist.

10. Verfahren nach Anspruch 2, wobei die Referenzfrequenzschicht zum Berechnen von mindestens einem verwendet wird von: einem Messzeitraum, $T_{RSTD,Gesamt}$, einer Gesamtdownlink-Referenzsignalzeitdifferenz, Gesamt-DL-RSTD, oder einem Messzeitraum für eine Referenzsignal-Empfangsleistung, $T_{PRS\_RSTD,i}$, eines DL-Positionsbestimmungsreferenzsignals, DL-PRS, und keine andere Frequenzschicht der ersten oder der zweiten Vielzahl von Frequenzschichten verwendet wird.

11. Verfahren nach Anspruch 1, umfassend:
Übertragen, durch die erste Kommunikationsvorrichtung an die zweite Kommunikationsvorrichtung, der Signalisierung, die mindestens Folgendes plant:

eine erste Positionsbestimmungsreferenzsignal-Ressource, Positionsbestimmungs-RS-Ressource, mit einer ersten Ressourcenkennung, Ressourcen-ID, oder einen ersten Ressourcensatz mit einer ersten Ressourcensatz-ID in einer ersten Frequenzschicht, und
eine zweite Positionsbestimmungs-RS-Ressource mit der ersten Ressourcen-ID oder einen Ressourcensatz mit der ersten Ressourcensatz-ID in einer zweiten Frequenzschicht, wobei die erste Frequenzschicht und die zweite Frequenzschicht aus der ersten Vielzahl von Frequenzschichten stammen.

12. Verfahren, umfassend:

Empfangen einer Signalisierung zur Planung einer aggregierten Positionsbestimmungsmessung von einer ersten Kommunikationsvorrichtung durch eine zweite Kommunikationsvorrichtung, und
Übertragen eines Berichts durch die zweite Kommunikationsvorrichtung an die erste Kommunikationsvorrichtung, der zweite aggregierte Positionsbestimmungsinformationen für aggregierte Positionsbestimmungsmessungen in einer zweiten Vielzahl von Frequenzschichten umfasst, wobei die zweiten aggregierten Positionsbestimmungsinformationen Fähigkeiten der Benutzereinrichtung, UE, für eine Gesamtheit der zweiten Vielzahl von Frequenzschichten umfassen und auf einem UE-Fähigkeitsbericht für mindestens eine der zweiten Vielzahl von Frequenzschichten basieren,
wobei die erste Kommunikationsvorrichtung eine erste aggregierte Positionsbestimmungsinformation für eine aggregierte Positionsbestimmungsmessung in einer ersten Vielzahl von Frequenzschichten konfiguriert, und
wobei die ersten aggregierten Positionsbestimmungsinformationen mit mindestens einer der ersten Vielzahl von Frequenzschichten verknüpft sind und die zweiten aggregierten Positionsbestimmungsinformationen mit mindestens einer der zweiten Vielzahl von Frequenzschichten verknüpft sind.

13. Erste Kommunikationsvorrichtung (102/202), umfassend: mindestens einen Prozessor, der konfiguriert ist zum:

Konfigurieren, für eine zweite Kommunikationsvorrichtung (104/204), einer ersten aggregierten Positionsbestimmungsinformation für eine aggregierte Positionsbestimmungsmessung in einer ersten Vielzahl von Frequenzschichten;
Senden einer Signalisierung zum Planen einer aggregierten Positionsbestimmungsmessung an die zweite Kommunikationsvorrichtung (104/204); und
Empfangen, über einen Empfänger von der zweiten Kommunikationsvorrichtung (104/204), eines Berichts, der zweite aggregierte Positionsbestimmungsinformationen für aggregierte Positionsbestimmungsmessungen in einer zweiten Vielzahl von Frequenzschichten umfasst, wobei die zweiten aggregierten Positionsbestimmungsinformationen Fähigkeiten der Benutzereinrichtung, UE, für eine Gesamtheit der zweiten Vielzahl von Frequenzschichten umfassen und auf einem UE-Fähigkeitsbericht für mindestens eine der zweiten Vielzahl von Frequenzschichten basieren,
wobei die ersten aggregierten Positionsbestimmungsinformationen mit mindestens einer der ersten Vielzahl von Frequenzschichten verknüpft sind und die zweiten aggregierten Positionsbestimmungsinformationen mit mindestens einer der zweiten Vielzahl von Frequenzschichten verknüpft sind.

14. Zweite Kommunikationsvorrichtung (104/204), umfassend:
mindestens einen Prozessor, der konfiguriert ist zum:

Empfangen einer Signalisierung zur Planung einer aggregierten Positionsbestimmungsmessung von einer ersten Kommunikationsvorrichtung (102/202), und
Übertragen, über einen Transmitter an die erste Kommunikationsvorrichtung (102/202), eines Berichts, der zweite aggregierte Positionsbestimmungsinformationen für aggregierte Positionsbestimmungsmessungen in einer zweiten Vielzahl von Frequenzschichten umfasst, wobei die zweiten aggregierten Positionsbestimmungsinformationen Fähigkeiten der Benutzereinrichtung, UE, für eine Gesamtheit der zweiten Vielzahl von Frequenzschichten umfassen und auf einem UE-Fähigkeitsbericht für mindestens eine der zweiten Vielzahl von Frequenzschichten basieren,

wobei die erste Kommunikationsvorrichtung (102/202) eine erste aggregierte Positionsbestimmungsinformation für eine aggregierte Positionsbestimmungsmessung in einer ersten Vielzahl von Frequenzschichten konfiguriert, und

wobei die ersten aggregierten Positionsbestimmungsinformationen mit mindestens einer der ersten Vielzahl von Frequenzschichten verknüpft sind und die zweiten aggregierten Positionsbestimmungsinformationen mit mindestens einer der zweiten Vielzahl von Frequenzschichten verknüpft sind.

**Revendications**

1. Procédé comprenant :

   la configuration, par un premier dispositif de communication, pour un second dispositif de communication, de premières informations de positionnement agrégées pour une mesure de positionnement agrégée dans une première pluralité de couches de fréquence ;
   la transmission, par le premier dispositif de communication au second dispositif de communication, d'une signalisation pour programmer la mesure de positionnement agrégée ; et
   la réception, par le premier dispositif de communication à partir du second dispositif de communication, d'un rapport comprenant de secondes informations de positionnement agrégées pour une mesure de positionnement agrégée dans une seconde pluralité de couches de fréquence, dans lequel les secondes informations de positionnement agrégées comprennent une capacité d'équipement utilisateur, UE, pour un agrégat de la seconde pluralité de couches de fréquence, et sont basées sur un rapport de capacité d'UE pour au moins l'une parmi la seconde pluralité de couches de fréquence,
   dans lequel les premières informations de positionnement agrégées sont associées à au moins l'une parmi la première pluralité de couches de fréquence, et les secondes informations de positionnement agrégées sont associées à au moins l'une parmi la seconde pluralité de couches de fréquence.

2. Procédé selon la revendication 1, dans lequel :

   l'une de la première ou de la seconde pluralité de couches de fréquence est une couche de fréquence de référence d'autres couches de fréquence de la première pluralité de couches de fréquence ou de la seconde pluralité de couches de fréquence, et
   seules les informations de positionnement de la couche de fréquence de référence sont utilisées comme premières informations de positionnement agrégées ou comme secondes informations de positionnement agrégées.

3. Procédé selon la revendication 2, dans lequel les informations de positionnement de la couche de fréquence de référence comportent au moins l'un parmi :

   un ensemble de ressources de signal de référence de positionnement, PRS, de liaison descendante, DL, à utiliser comme référence pour des mesures de différence temporelle de signal de référence DL, RSTD, de puissance reçue de signal de référence PRS DL, PRS-RSRP, et de différence temporelle de réception-transmission, Rx-Tx, d'UE ;
   un identifiant, ID, de point de transmission-réception, TRP, un ou plusieurs ID de ressources PRS DL ou un ID d'ensemble de ressources PRS DL, utilisés pour déterminer la référence pour les mesures ; ou
   un paramètre d'horodatage qui comporte un réseau monofréquence, SFN, et un numéro de créneau pour un espacement de sous-porteuse, SCS.

4. Procédé selon la revendication 1, comprenant :
   la réception, par le premier dispositif de communication à partir du second dispositif de communication, d'une indication selon laquelle un sous-ensemble de la première pluralité de couches de fréquence ou un sous-ensemble d'une première pluralité d'identifiants, ID, d'ensemble de ressources de positionnement configurés par le premier dispositif de communication, doit être mesuré pour le rapport de mesure de positionnement agrégé.

**5.** Procédé selon la revendication 1, dans lequel le rapport de capacité d'UE comprenant au moins l'un parmi :

une largeur de bande maximale, $B_F$, d'un agrégat de la seconde pluralité de couches de fréquence ;
un nombre maximum de couches de fréquence, F, dans l'agrégat ;
une première durée, $N_F$, de symboles de signal de référence de positionnement, PRS, de liaison descendante, DL, en millisecondes, ms, traitée toutes les deux durées, $T_F$, en ms pour la mesure de l'agrégat ; ou
un maximum ou un minimum de déphasage ou de décalage temporel entre les couches de fréquence dans l'agrégat.

**6.** Procédé selon la revendication 5, dans lequel :

la $B_F$ comporte un ou plusieurs écarts de fréquence entre des paires de couches de fréquence dans la seconde pluralité de couches de fréquence ; ou
$N_F \leq N$ ou $T_F \geq T$, et N est une première durée de symboles PRS DL en ms traitée toutes les secondes durées, T, en millisecondes, ms, pour la mesure d'une seule couche de fréquence.

**7.** Procédé selon la revendication 5, dans lequel au moins l'un parmi :

$N_F$ est déterminée selon N et au moins l'un parmi : F, $B_F$ ou B ;
$T_F$ est déterminée selon T et au moins l'un parmi F, $B_F$ ou B ; ou
$R_F$ est déterminée selon R et au moins l'un parmi F, $B_F$ ou B ; et
dans lequel :

$N_F$ est une première durée de symboles de signal de référence de positionnement, PRS, de liaison descendante, DL, en millisecondes, ms, traitée toutes les secondes durées, $T_F$, en ms pour la mesure de l'agrégat,
F est un nombre maximum de couches de fréquence dans l'agrégat,
N est une première durée de symboles PRS DL en ms traitée toutes les secondes durées, T, en ms pour une mesure d'une couche de fréquence, et
B est une largeur de bande maximale de l'une couche de fréquence,
$B_F$ est une largeur de bande maximale, $B_F$, d'un agrégat de la seconde pluralité de couches de fréquence.

**8.** Procédé selon la revendication 1, dans lequel :

une durée $K_F$ en millisecondes, ms, de symboles de signal de référence de positionnement, PRS, de liaison descendante, DL, dans une fenêtre temporelle, P, en ms pour un agrégat de couches de fréquence de la première ou de la seconde pluralité de couches de fréquence, est déterminée en utilisant K et au moins l'un parmi : F', $B_F$' ou B ; et
dans lequel :

K est une durée en ms de symboles PRS DL dans une fenêtre temporelle en ms pour le traitement PRS d'une couche de fréquence,
F est un nombre maximum de couches de fréquence dans l'agrégat,
F' est un nombre configuré de couches de fréquence dans l'agrégat, ou une fonction du nombre configuré de couches de fréquence,
$B_F$' est une largeur de bande configurée de l'agrégat, une fonction de la largeur de bande configurée, et
B est une largeur de bande maximale de l'une couche de fréquence.

**9.** Procédé selon la revendication 8, dans lequel :

$$K_F = F' * K \text{ ;}$$

ou
$K_F$ est K multiplié par une fonction de $B_F$' et B.

**10.** Procédé selon la revendication 2, dans lequel la couche de fréquence de référence est utilisée pour calculer au moins l'un parmi : une période de mesure de différence temporelle de signal de référence, RSTD, de liaison descendante, DL, totale, $T_{RSTD,Total}$, ou une période de mesure pour la puissance reçue de signal de référence de signal de référence de positionnement, PRS, de DL, $T_{PRS\_RSTD,i}$, et aucune autre couche de fréquence de la première ou de la seconde pluralité de couches de fréquence n'est utilisée.

11. Procédé selon la revendication 1, comprenant :
la transmission, par le premier dispositif de communication au second dispositif de communication, de la signalisation qui programme au moins :

une première ressource de signal de référence, RS, de positionnement avec un premier identifiant, ID, de ressource ou un premier ensemble de ressources avec un premier ID d'ensemble de ressources, dans une première couche de fréquence, et
une seconde ressource RS de positionnement avec le premier ID de ressource ou un ensemble de ressources avec le premier ID d'ensemble de ressources, dans une seconde couche de fréquence, dans lequel la première couche de fréquence et la seconde couche de fréquence font partie de la première pluralité de couches de fréquence.

12. Procédé comprenant :

la réception, par un second dispositif de communication, d'une signalisation pour programmer une mesure de positionnement agrégée à partir d'un premier dispositif de communication ; et
la transmission, par le second dispositif de communication au premier dispositif de communication, d'un rapport comprenant de secondes informations de positionnement agrégées pour une mesure de positionnement agrégée dans une seconde pluralité de couches de fréquence, dans lequel les secondes informations de positionnement agrégées comprennent une capacité d'équipement utilisateur, UE, pour un agrégat de la seconde pluralité de couches de fréquence et sont basées sur un rapport de capacité d'UE pour au moins l'une parmi la seconde pluralité de couches de fréquence,
dans lequel le premier dispositif de communication configure de premières informations de positionnement agrégées pour une mesure de positionnement agrégée dans une première pluralité de couches de fréquence, et
dans lequel les premières informations de positionnement agrégées sont associées à au moins l'une parmi la première pluralité de couches de fréquence, et les secondes informations de positionnement agrégées sont associées à au moins l'une parmi la seconde pluralité de couches de fréquence.

13. Premier dispositif de communication (102/202) comprenant : au moins un processeur configuré pour :

configurer, pour un second dispositif de communication (104/204), de premières informations de positionnement agrégées pour une mesure de positionnement agrégée dans une première pluralité de couches de fréquence ;
transmettre au second dispositif de communication (104/204) une signalisation pour programmer une mesure de positionnement agrégée ; et
recevoir, par l'intermédiaire d'un récepteur à partir du second dispositif de communication (104/204), un rapport comprenant de secondes informations de positionnement agrégées pour une mesure de positionnement agrégée dans une seconde pluralité de couches de fréquence, dans lequel les secondes informations de positionnement agrégées comprennent une capacité d'équipement utilisateur, UE, pour un agrégat de la seconde pluralité de couches de fréquence, et sont basées sur un rapport de capacité d'UE pour au moins l'une parmi la seconde pluralité de couches de fréquence,
dans lequel les premières informations de positionnement agrégées sont associées à au moins l'une parmi la première pluralité de couches de fréquence, et les secondes informations de positionnement agrégées sont associées à au moins l'une parmi la seconde pluralité de couches de fréquence.

14. Second dispositif de communication (104/204) comprenant :
au moins un processeur configuré pour :

recevoir à partir d'un premier dispositif de communication (102/202) une signalisation pour programmer une mesure de positionnement agrégée ; et
transmettre, par l'intermédiaire d'un transmetteur au premier dispositif de communication (102/202), un rapport comprenant de secondes informations de positionnement agrégées pour une mesure de positionnement agrégée dans une seconde pluralité de couches de fréquence, dans lequel les secondes informations de positionnement agrégées comprennent une capacité d'équipement utilisateur, UE, pour un agrégat de la seconde pluralité de couches de fréquence, et sont basées sur un rapport de capacité d'UE pour au moins l'une parmi la seconde pluralité de couches de fréquence,

dans lequel le premier dispositif de communication (102/202) configure de premières informations de positionnement agrégées pour une mesure de positionnement agrégée dans une première pluralité de couches de fréquence, et

dans lequel les premières informations de positionnement agrégées sont associées à au moins l'une parmi la première pluralité de couches de fréquence, et les secondes informations de positionnement agrégées sont associées à au moins l'une parmi la seconde pluralité de couches de fréquence.

FIG. 1

FIG. 2

300

FIG. 3

400

| A/D 405 | Positioning SRS Resource Set's Cell ID Ci 410 | | | BWP ID Bi 415 | |
|---------|--------|--------|---------|---------|--------|
| R 420 | S 425 | C 430 | SUL 435 | Positioning SRS Resources Set ID I 440 | |
| Spatial Relation for Resource $ID_0$ 445A | | | | | |
| Spatial Relation for Resource $ID_1$ 445B | | | | | |

...

| Spatial Relation for Resource $ID_{M-1}$ 445C |
|---|

# FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CATT**. FL Summary #9 for Potential Positioning Enhancements. *3GPP DRAFT; R1-2009678*